# EUROPEAN PATENT APPLICATION

(11) **EP 4 851 580 A1**
(43) Date of publication of application: **09.12.2026**
(21) Application number: 25181384.6
(22) Date of filing: 06.06.2025
(51) Int. Cl.: G01C 21/00, G01C 23/00, G08G 5/30

(54) **DATA PREPARATION METHOD FOR THE NAVIGATION OF A VEHICLE, AND ASSOCIATED VEHICLE NAVIGATION METHOD, NAVIGATION SYSTEM AND VEHICLE**

(71) Applicant: Aviovision, 3500 Hasselt (BE)
(72) Inventor: Vanmeert, Dries, 2221 BOOISCHOT (BE); Geleyns, Dieter, 6227 SK MAASTRICHT (NL)
(74) Representative: Lavoix

(57) **Abstract**

A method for preparing navigation data for a vehicle comprises : a) providing a set of main points defining a primary trajectory between a start main point and an end main point, each pair of successive main points being connected by a main line, and providing one or more alternative points to which the vehicle may be rerouted; b) for each alternative point, determining an alternative distance to the respective closest main point and a connection distance inversely proportional to the alternative distance; c) forming a set of connected main points within the connection distance and determining a corresponding set of alternative lines connecting the alternative point to each connected main point ; d) calculating buffer zones for each main line and for at least the outermost alternative lines. A corridor zone encompassing all the buffer zones is then formed, and geospatial data corresponding to the corridor zone is downloaded into a memory of the vehicle for use during navigation.

## Description

The present invention concerns a data preparation method for preparing data in view of a navigation of a vehicle, an associated vehicle navigation method, as well as a corresponding navigation system and a vehicle equipped with such a navigation system.

### Background of the invention

In the field of routing a vehicle, such as an aircraft, a ship or a land vehicle, for performing respective mission, optimization algorithms allow determining an optimal trajectory to be followed by the vehicle between a start point and an end point, based on data available at the time the optimization is performed.

The optimal trajectory is determined based on available data related to the vehicle, such as capacities of the vehicle and/or available data related to the potential environment of the vehicle along the potential trajectory, for example meteorological data.

Then, the vehicle is moved along the determined optimal trajectory, the navigation being optionally assisted by a navigation system.

One or more additional data relating to the environment of the vehicle along the determined optimal trajectory and/or relating to the vehicle may be obtained after the determination of the optimal trajectory, notably while the vehicle is moving. Such additional data may justify a rerouting of the vehicle, comprising changing at least a remaining portion of the current trajectory, and optionally the trajectory's end point.

For example, if the vehicle is an aircraft, a meteorological event, which was unpredictable at the starting time of the aircraft's flight along the optimal trajectory, may make it necessary to divert the aircraft to another landing airport or to avoid a specific zone crossed by the current optimal trajectory.

In another example, an early landing may be necessitated by an aircraft failure.

In view of a potential need of rerouting, prior art vehicle navigation methods comprise calculating a corridor zone in which one or more alternative trajectories can be proposed.

The corridor zone is calculated based on the determined optimal trajectory and on a plurality of alternative points towards which the vehicle could be re-routed if needed.

In the example of the aircraft, the alternative points comprises for example alternative airports or emergency landing zones.

In these prior art methods, the corridor zone is calculated with a concave hull algorithm or a convex hull algorithm.

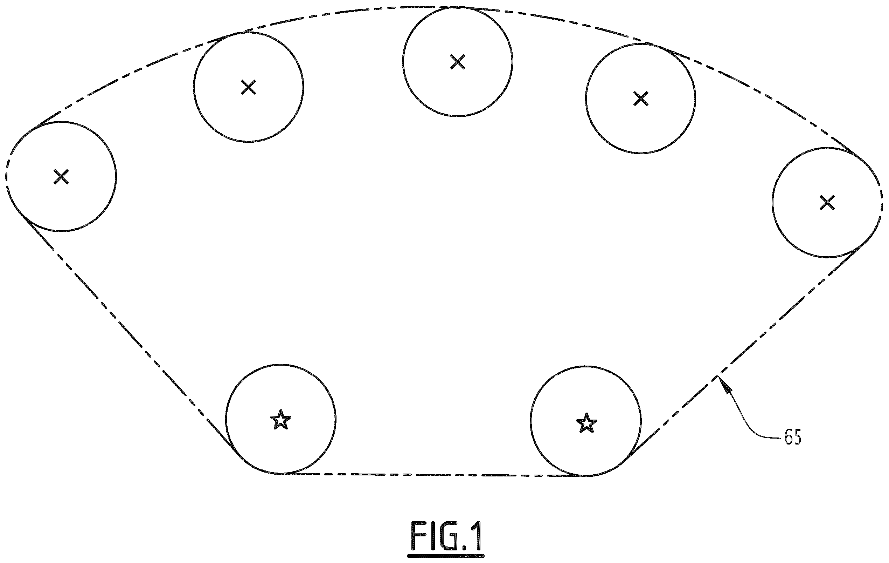

In case of a convex hull algorithm, the corridor zone may be suboptimal, in that the calculated corridor zone encompasses areas that are not relevant for the vehicle. This problem is visible in the central lower part of figure 1, wherein the dotted line represents the edge of a corridor zone calculated with a convex-hull algorithm for the four trajectory points (four crosses) and the four alternative points (four stars) represented, taking into account a buffer distance around these points. Consequently, the volume of data related to the corridor zone to be uploaded for the navigation of the vehicle is unnecessarily high.

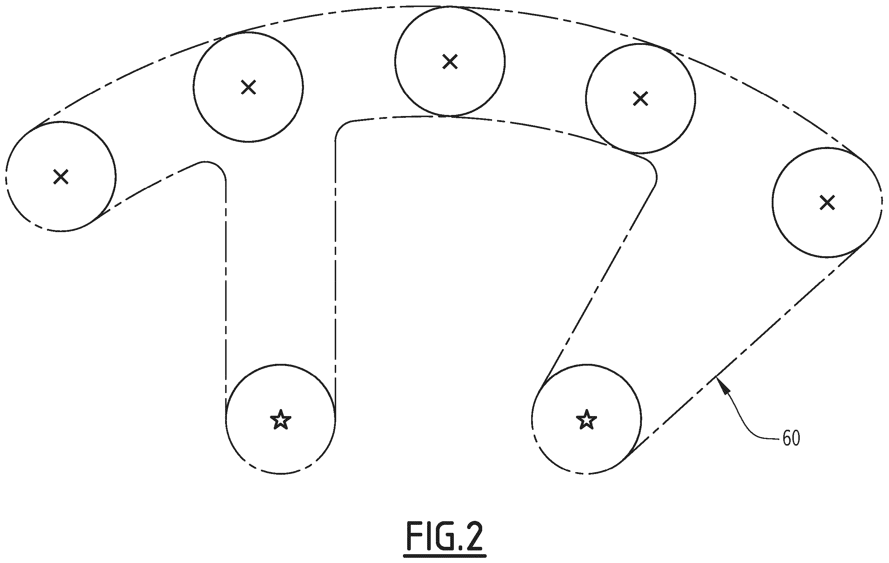

On the contrary, in case of a concave-hull algorithm, the corridor zone may not include some areas, which could be reasonably useful for performing the vehicle's mission. This is visible in figure 2, wherein the dotted line represents the edge of the corridor zone calculated with a concave-hull algorithm for the same eight trajectory and/or alternative points and buffer distance as for figure 1. Consequently, the re-routing of the vehicle may not consider some relevant alternative trajectories.

One aim of the invention is thus to provide a data preparation method for a navigation of a vehicle, which allows subsequent vehicle navigation to be carried out, including vehicle rerouting if necessary, these navigation and rerouting requiring less data while being at least as optimal as prior art methods, and/or being optimized compared to prior art methods while requiring at most the same volume of data.

### Summary of the invention

To this aim, the invention relates to a data preparation method for a navigation of a vehicle, the data preparation method comprising:
a) providing:
   - a set of main points, representing a primary trajectory to be followed by the vehicle between a start main point and an end main point, any two successive main points being connected by a respective main line, and
   - one or more alternative points, towards each of which the vehicle may be rerouted from the primary trajectory;
b) for each alternative point:
   - determining a respective alternative distance, which is the distance between the alternative point and the respective closest main point, and a respective connection distance, which varies inversely to the alternative distance,
   - forming a respective set of connected main points consisting of all the main points that are at a distance less than or equal to the connection distance from the alternative point,
   - determining, with the set of connected main points, a respective set of alternative lines, each alternative line joining the alternative point and a respective connected main point;
c) for each of the main lines and for each of at least respective outermost alternative lines of the respective determined alternative lines of each alternative point, calculating a respective buffer zone comprising all the points that are at a distance less than or equal to a predetermined buffer distance from the respective main or alternative line;
d) forming a corridor zone, which is the smallest simply connected volume containing all the determined buffer zones;
e) downloading geospatial data related to the corridor zone into a memory of the vehicle in view of a subsequent navigation of the vehicle.

According to other advantageous aspects of the invention, the data preparation method comprises one or several of the following features, taken individually or according to any technically possible combination:
- the respective connection distance (DCONN,j) is the ratio of a predetermined sizing coefficient (SC) and the respective alternative distance (DALT,j) : ${D}_{CONN , j} = \frac{SC}{{D}_{ALT , j}}$
- the formation step d) comprises a validation substep of the corridor zone, and if applying providing a new sizing coefficient and reiterating the determination step b), the calculation step c) and the formation step d) with the new sizing coefficient;
- the data preparation method further comprises providing a new buffer distance for the reiteration of the determination step b), the calculation step c) and the formation step d) with the new sizing coefficient;
- the alternative lines and optionally the main lines are straight lines.

The invention also relates to a vehicle navigation method comprising:
- performing the data preparation method; and
- f) navigating the vehicle, based on the downloaded geospatial data related to the corridor zone.

According to other advantageous aspects of the invention, the vehicle navigation method comprises one or several of the following features, taken individually or according to any technically possible combination:
- the geospatial data related to the corridor zone are downloaded only once, before moving the vehicle from the start main point;
- the navigation f) of the vehicle comprises:
   ∘ f1) monitoring at least one additional information related to the vehicle and/or to the corridor zone ;
   ∘ f2) based on the monitoring, determining if needed at least one updated trajectory to be followed by the vehicle between a respective start point in the corridor zone, corresponding to a current or future position of the vehicle along the current primary trajectory, and a respective end point, and in this case,
   ∘ f3) rerouting the vehicle along the updated trajectory;
- the vehicle navigation method further comprises repeating steps a), b), c), d), and optionally e), with the updated trajectory.

The invention also relates to a navigation system configured for performing the above-mentioned vehicle navigation method.

The invention also relates to vehicle equipped with such a navigation system.

### Brief description of the figures

Figure 1 is a view of a corridor zone obtained with a prior art convex-hull algorithm;
Figure 2 is a view of a corridor zone obtained with a prior art concave-hull algorithm;
Figure 3 is a schematic view of a vehicle without concern for scale according to the invention at a current position along a primary trajectory to be followed;
Figure 4 is a schematic view of a navigation system according to the invention equipping the vehicle of figure 3;
Figure 5 is a flow chart of an embodiment of the vehicle navigation method carried out by the navigation system of figure 4;
Figure 6 is a schematic view of main and alternative points and main lines provided at the provision step of the method of figure 5 and of the alternative distances determined at the determination step of the method of figure 5;
Figure 7 is an illustration of the connection distances determined at the determination step of the method of figure 5 and of the set of connected main points formed at this determination step ;
Figure 8 is an illustration of the alternative lines determined at the determination step of the method of figure 5 and of some of the buffer zones calculated at the calculation step of the method of figure 5 ;
Figure 9 is an illustration of corridor zone obtained at the formation step of the method of figure 5, as well as of the corridor zones obtained in the same situation with a convex-hull algorithm and a concave-hull algorithm ;

### Detailed description

The invention relates to a navigation method for a vehicle 10.

The vehicle 10 is for example an aircraft, a ship, a submarine vehicle or a land vehicle.

In a particular embodiment, the vehicle 10 is an unmanned vehicle.

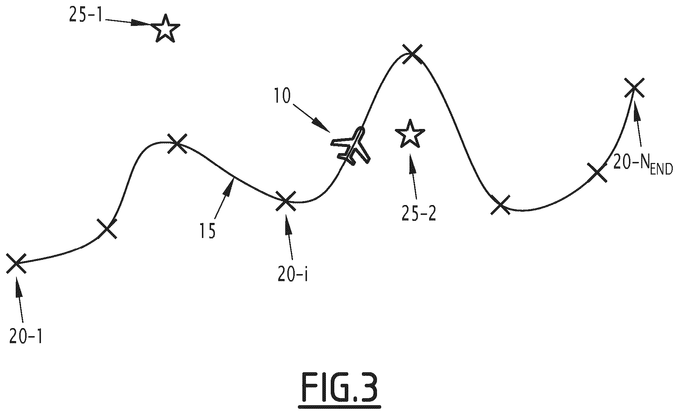

In reference to figure 3, the vehicle 10 is configured for executing a mission associated with a primary trajectory 15.

The primary trajectory 15 is to be followed by the vehicle 10 executing the mission between a start main point and an end main point.

The primary trajectory 15 is represented by a set of main points 20-i, i being a positive integer comprised from 1 to a total number N_{END} of main points 20-i which is an integer strictly greater than 2.

The first main point 20-1 is the so-called start main point of the primary trajectory 15, and the last main point 20- N_{END} is the so-called end main point of the primary trajectory 15.

The primary trajectory 15 is an intended trajectory determined, and optionally optimized, given the data available at an initial routing date t_{IN} at which this primary trajectory 15 is determined.

In the example of figure 3, the set of main points 20-i comprises eight main points 20-1 to 20-8.

If needed, due to additional data obtained after the initial routing date t_{IN}, the vehicle 10 may execute the mission based on one or more alternative points 25-j, j being an integer comprised from 1 and an integer N_{ALT} greater or equal to 1.

In the example of figure 3, two alternative points 25-1 and 25-2 are shown.

Each alternative point 25-j is a geographical point towards which the rerouting of the vehicle 10 may be considered if needed.

As an illustrative example, in case the vehicle 10 is a plane as shown in figure 3, the alternative point 25-j is an airport or a landing zone suitable for emergency landing.

The vehicle 10 is equipped with a navigation system 31 according to the invention.

The navigation system 31 is configured for performing a data preparation method 100 for a navigation of the vehicle 10 according to the invention and/or a vehicle navigation method 102 according to the invention, which will be described hereafter.

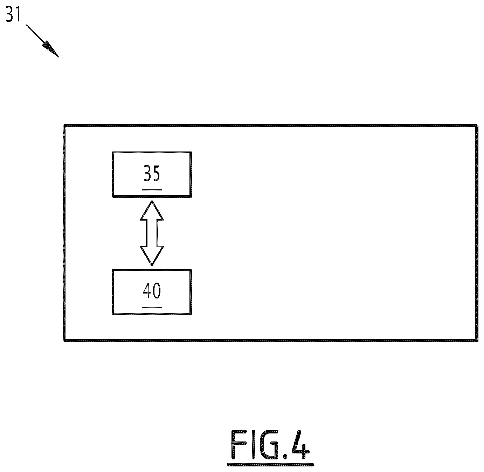

To this end, the navigation system 31 comprises, in reference to figure 4, a memory 35 storing a corresponding and a processor 40 for executing this software.

In addition or alternatively, the navigation system 31, for example, is implemented as an FPGA (Field Programmable Gate Array) and/or ASIC (Application-Specific Integrated Circuit) programmable circuit.

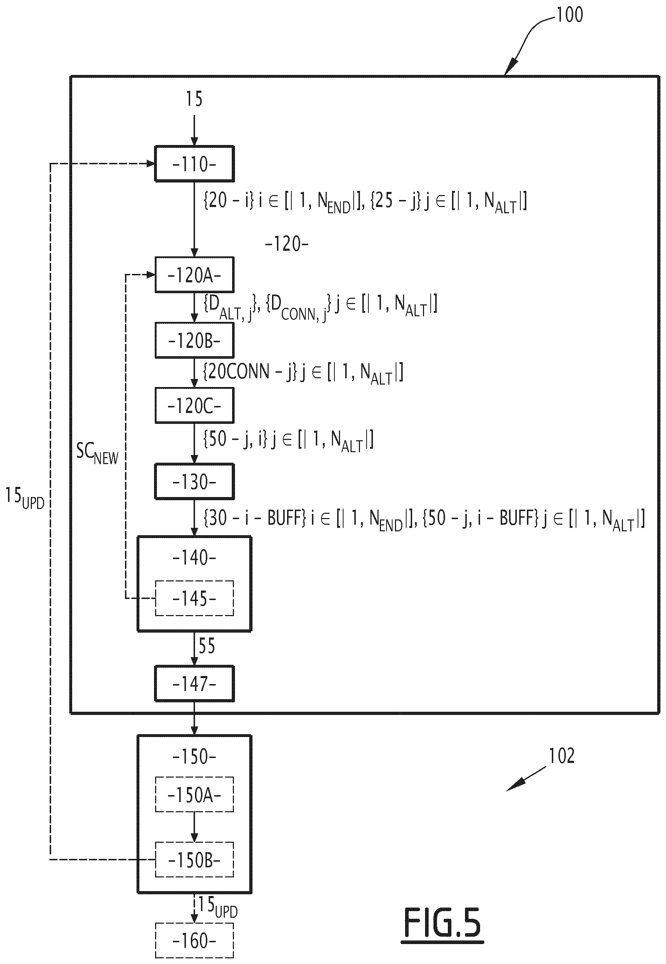

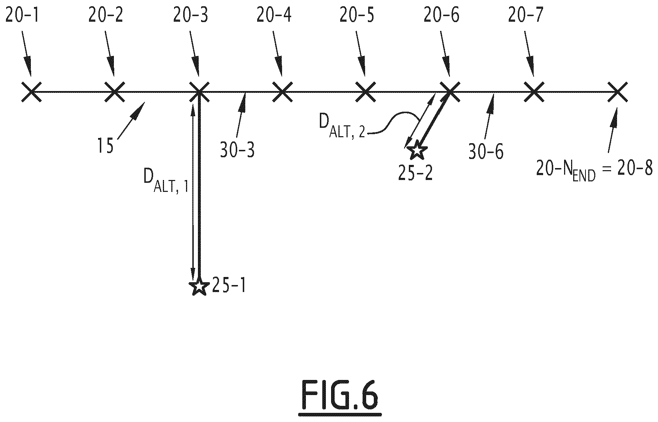

The vehicle navigation method 102 comprises, in reference to figures 5 and 6, performing the data preparation method 100 as described hereafter, and navigating the vehicle 10, based on geospatial data downloaded with the data preparation method 100.

The data preparation method 100 for the navigation of the vehicle 10 comprises a provision step 110, comprising providing the set of main points 20-i and the one or more alternative points 25-j.

As already mentioned, the set of main points 20-i represents the primary trajectory 15 to be followed by the vehicle 10 between the start main point 20-1 and the end main point 20-N_{END}, the latter corresponding to main point 20-8 in figure 6.

In the examples of figures 6 to 9, the eight main points 20-i of the trajectory 15 are represented as aligned and regularly spaced apart along a straight line for the sole purpose of simplifying these figures.

In a general manner, the primary trajectory 15 is a line having any shape in two dimensions or in three dimensions, as visible in figure 3.

Any two successive main points 20-i, 20-(i+1) are connected by a respective main line 30-i.

In a particular embodiment, the main lines 30-i are straight lines as shown in figure 6.

The total number N_{END} of main points 20-i and/or the distances between any two successive main points 20-i, 20-(i+1) may be chosen such that the line formed by the successive main lines 30-i fits the primary trajectory 15 with a predetermined precision.

Increasing the total number N_{END} of main points 20-i enhances the precision of the fitting but simultaneously increases the time and memory cost of the vehicle navigation method 100.

As already mentioned, the one or more alternative points 25-j are geographical points, towards each of which the vehicle 10 could be rerouted from the primary trajectory 15.

The vehicle navigation method 100 then comprises a determination step 120, comprising a first determination substep 120A, a formation substep 120B, and a second determination substep 120C.

The first determination substep 120A comprises, for each alternative point 25-j, determining a respective alternative distance D_{ALT,j} and a respective connection distance D_{CONN,,j}, which varies inversely to the alternative distance D_{ALT,j}.

The respective alternative distance D_{ALT,j} is the distance between the alternative point 25-j and the respective closest main point 20-i,j.

In a particular embodiment, the respective connection distance D_{CONN,,j} is the ratio of a predetermined sizing coefficient SC and the respective alternative distance D_{ALT,j}: ${D}_{CONN , j} = \frac{SC}{{D}_{ALT , j}}$ (1)

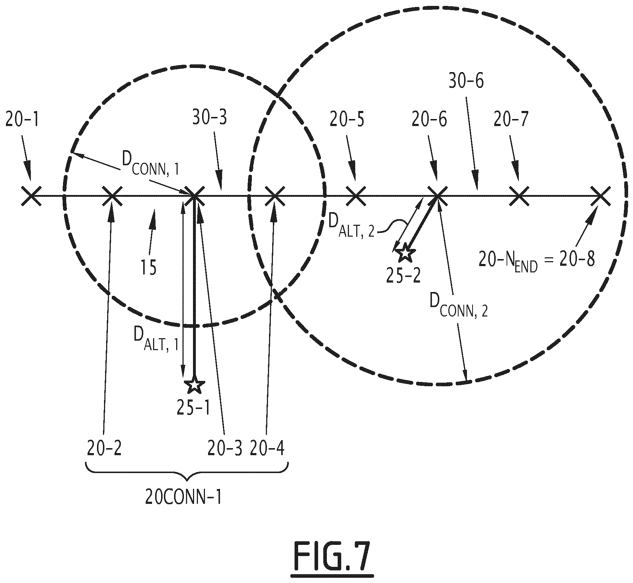

The respective alternative distances D_{ALT,1}, D_{ALT,2} and the respective connection distances D_{CONN,1}, D_{CONN,2} of the two alternative points 25-1 and 25-2 can be observed in the examples of figures 6 and 7.

In this example, the third main point 20-3 is the main point 20-i closest to the first alternative point 25-1, and the sixth main point 20-6 is the main point 20-i closest to the second alternative point 25-2.

In this example, the first connection distance D_{CONN,1} is much lower than the second connection distance D_{CONN,2}. Since the second alternate point 25-2 is closer to the primary trajectory 15 than the first alternate point 25-1, its potential rerouting is indeed greater than the one as the first alternate point 25-2, which is taken into account by the connection distance D_{CONN,,j}.

Then, the formation substep 120B comprises forming, for each alternative point 25-j, a respective connected set 20CONN-j of connected main points 20-i, as shown in figure 7. The respective connected set 20CONN-j of a given alternative point 25-j consists of all the main points 20-i that are at a distance less than or equal to the respective connection distance D_{CONN,,j} from the alternative point 25-j.

In the example of figure 7, the first connected set 20CONN-1 corresponding to the first alternative point 25-1 comprises three main points 20-i, namely main points 20-2, 20-3 and 20-4. The second connected set 20CONN-2 (not represented) corresponding to the second alternative point 25-2 comprises five main points 20-i, namely main points 20-4, 20-5, 20-6, 20-7 and 20-8 = 20-N_{END}.

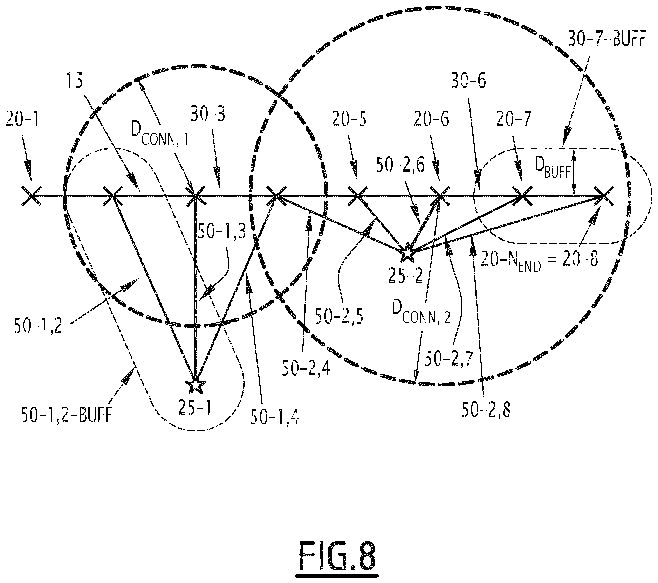

Next, the second determination substep 120C comprises, for each alternative point 25-j, determining with the respective connected set 20CONN-j of connected main points, a respective set of alternative lines 50-j,i each alternative line joining the alternative point 25-j and a respective connected main point 20-l, as shown in figure 8.

In the example of figure 8, the first connected set 20CONN-1 corresponding to the first alternative point 25-1 allows forming three alternative lines 50-1,2; 50-1,3 and 50-1,4. The second connected set 20CONN-2 allows forming five alternative lines 50-2,4 to 50-2,8.

The alternative lines 50-j,i are straight lines as shown in figure 8.

Then, the data preparation method 100 comprises a calculation step 130.

The calculation step 130 comprises calculating for each of the main lines 30-i and for each alternative point 25-j, for at least each of the outermost alternative lines 50-j,i of the respective determined alternative lines 50-j,i obtained at the determination step 120, a respective buffer zone 30-i-BUFF, 50-j,i-BUFF comprising all the geographical points that are at a distance less than or equal to a predetermined buffer distance D_{BUFF} from the respective main or alternative line 30-i, 50-j,i.

In a particular embodiment, the calculation step 130 comprises a selection substep, at which for each alternative point 25-j, said outermost alternative lines 50-j,i are selected among the respective alternative lines 50-j,i. An outermost alternative line 50-j,i is an alternative line which is not framed by two other alternative lines 50-j,i corresponding to the same alternative point 25-j along any direction of the space.

As an illustrative example, alternative lines 50-1,2 and 50-1,4 are the outermost alternative lines for alternative point 25-1 in figure 8, and alternative lines 50-2,4 and 50-2,8 are the outermost alternative lines for alternative point 25-2 of figure 8.

In the example of figure 8, only two of the determined buffer zones 30-i-BUFF, 50-j,i-BUFF are shown, namely 30-7-BUFF and 50-1-BUFF, in order to avoid overloading the figure.

In another embodiment of the calculation step 130, a respective buffer zone 50-j,i-BUFF is calculated for each of the alternative lines 50-j,i for each alternate point 25-j.

In a particular embodiment, the predetermined buffer distance D_{BUFF} is strictly greater than zero, for example of at least 50 km, or at least 75 km or even at least 90 km.

Next, the planning method 100 comprises a formation step 140 comprising forming a corridor zone 55, which is the smallest simply connected volume containing all the determined buffer zones 30-i-BUFF, 50-j,i-BUFF.

Since the corridor zone 55 is a simply connected volume, any internal gaps between any of the buffer zones 30-i-BUFF, 50-j,i-BUFF are ignored, avoiding the problems associated with doughnut-shaped corridor zones obtained with some prior art methods. In particular, by forming a simply connected corridor, structured and flexible alternative trajectories can subsequently be determined if needed, thus ensuring efficient and smooth movement of the vehicle 10 while accommodating potential disruptions, such as failure of the vehicle 10 or unforeseen events in the corridor zone 55.

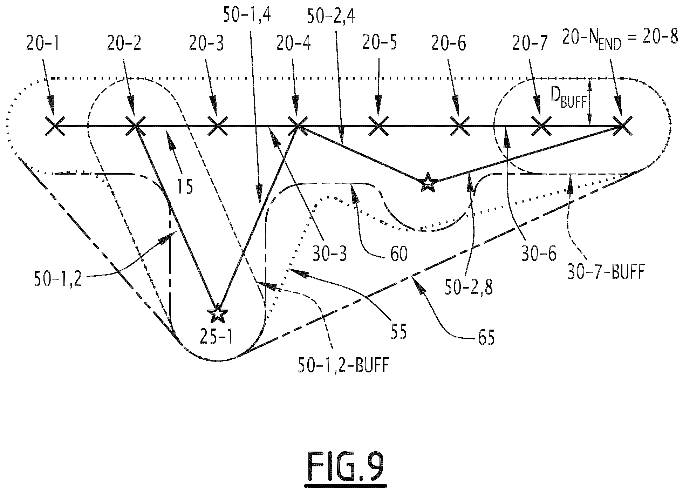

The result of the formation step 140 for the example of figure 6 can be observed in figure 9.

As visible in this figure, the corridor zone 55 obtained with the data preparation method 100 according to the invention is larger than the one that would have been obtained with a concave hull algorithm with the same buffer distance (corresponding to reference sign 60 in figure 9) and smaller than the one that would have been obtained with a convex hull algorithm with the same buffer distance (corresponding to reference sign 65 in figure 9).

Consequently, the data preparation method 100 allows an optimal trade-off between the concave-hull algorithms and the convex-hull algorithms, by selecting all the geographical zones that could be relevant for a rerouting of the vehicle 10 without simultaneously selecting uninteresting geographical zones.

This is in particular based on the inventive concepts of connected distance D_{CONN}-j and of connected set 20CONN-j implemented in the invention.

In a particular embodiment, the formation step 140 comprises an optional validation step 145 for validating the corridor zone 55. If the determined corridor zone 55 is not satisfactory and hence not validated, a new value SC_{NEW} of the sizing coefficient SC is provided, and the determination step 120, the calculation step 130 and the determination step 140 are reiterated based on the new value SC_{NEW} of the sizing coefficient SC.

In a general manner, adjusting the sizing coefficient SC allows controlling the width and the flexibility of the corridor zone 55. Increasing the sizing coefficient SC results in a wider corridor zone 55 that accommodates more potential alternative trajectories.

Optionally, a new buffer distance D_{BUFF, NEW} is also provided for the reiteration of the determination step 120, the calculation step 130 and the determination step 140.

Once the corridor zone 55 is determined, the data preparation method 100 comprises a downloading step 147, during which geospatial data relative to the corridor zone 55 are downloaded into a memory of the vehicle 10, for example the memory 35 of the navigation system 31, in view of the subsequent navigation of the vehicle 10.

The geospatial data related to the corridor zone 55 comprises a plurality of location data and respective temporal and attribute data.

The location data are for example Earth coordinates.

The attribute data comprises for example meteorological data, or any other relevant attribute with respect to a type of the vehicle 10 and or a type of mission to be executed [.

The vehicle navigation method 102 comprises a navigation step 150, comprising performing the navigation of the vehicle 10 based on the downloaded geospatial data related to the corridor zone 55 downloaded at the downloading step 147.

Since the volume of the corridor zone 55 according to the invention is optimized compared to prior art corridor zones 60, 65, the volume of geospatial data required is also optimized.

Consequently, the memory and time complexity of the vehicle navigation method 100 is optimized, in particular reduced compared to prior art methods based on convex hull algorithms. Simultaneously, the uploaded geospatial data allow proposing more alternative trajectories than prior art methods based on concave hull algorithms.

In other words, the vehicle navigation method 102 allows minimizing the total volume of geospatial data while ensuring that all feasible diversion scenarios are still adequately covered.

In a particular embodiment, the geospatial data related to the corridor zone 55 are downloaded only once before or at a departure time t_{START} of the vehicle from the start main point 20-1.

In this case, the navigation step 150 can subsequently be performed without access or with restrained access to a data source of the geospatial data related to the corridor zone 55 which is external to the vehicle 10 after the departure time t_{START}.

The navigation step 150 optionally comprises a monitoring substep 150A, during which one or more additional data are received by the processor 40 from one or more external data source of external additional data and/or from one or more additional sensors of the vehicle 10 providing one or more internal additional data.

The external data source is for example a vehicle operation control center such as an airport operation control center. The external additional data comprises for example information on one or more geographical points in the corridor zone 55, in particular one of the main points 20-i and/or alternative points 25-j, such as availability or not of these points for rerouting of the vehicle 10.

For example, in case of an airplane, the external data source is for example an airport operations control center providing information on availability of one or more airports for landing.

The monitoring substep 150A comprises triggering, if needed, an additional determination substep 150B comprising determining an updated primary trajectory 15_{UPD} based on the additional data received and on the downloaded geospatial data, the updated primary trajectory 15_{UPD} being comprised in the corridor zone 55.

If an updated trajectory 15_{UPD} is thus determined, the provision step 110, the determination step 120, the calculation step 130, the formation step 140 are optionally iterated based on this updated primary trajectory 15_{UPD}.

In this case, in case the vehicle 10 can access to the geospatial data source, the navigation step 150 optionally comprises updating the geospatial data related to the corridor zone 55 based on an updated corridor zone 55 corresponding to the updated primary trajectory 15_{UPD}.

In another embodiment, since the updated primary trajectory 15_{UPD} is comprised in the corridor zone 55, the navigation step 150 may be continued based on the geospatial data already downloaded.

The vehicle navigation method 100 then comprises if applying, a rerouting and navigating step 160 of the vehicle 10 along the updated trajectory 15_{UPD}.

The navigation step 150 and/or the rerouting and navigating step 160 may be performed based on the geospatial data related to the corridor zone 55 downloaded only once before or at the departure time t_{START} of the vehicle from the initial start main point 20-1. This is in particular the case when there is no access or limited access to a data source of the geospatial data.

Alternatively, the navigation step 150 and/or rerouting and navigating step 160 may comprise updating the geospatial data related to the corridor zone 55 after the departure time t_{START} of the vehicle from the initial start main point 20-1. In this case, thanks to the optimized volume of the corridor zone 55, the volume of data to be updated is still optimized.

In a particular embodiment, the navigation step 150 comprises providing a map of the corridor zone 55 on a graphical interface of the vehicle 10, this map comprising data obtained based on the downloaded geospatial data and being optionally centered on a current position of the vehicle 10.

## Claims

1. Data preparation method (100) for a navigation of a vehicle (10), the data preparation method (90) comprising:
a) providing (110):
- a set of main points (20-i), representing a primary trajectory (15) to be followed by the vehicle between a start main point (20-1) and an end main point (20-N_{END}), any two successive main points (20-i, 20-(i+1)) being connected by a respective main line (30-i), and
- one or more alternative points (25-j), towards each of which the vehicle (10) may be rerouted from the primary trajectory (15);
b) for each alternative point (25-j):
- determining (120A) a respective alternative distance (D_{ALT,j}), which is the distance between the alternative point (25-j) and the respective closest main point (20-i), and a respective connection distance (D_{CONN,j}), which varies inversely to the alternative distance (D_{ALT,j}),
- forming (120B) a respective set (20CONN-j) of connected main points (20-i) consisting of all the main points (20-i) that are at a distance less than or equal to the connection distance from the alternative point (25-j),
- determining (120C), with the set (20CONN-j) of connected main points (20-i), a respective set of alternative lines (50-j,i), each alternative line (50-j,i) joining the alternative point (25-j) and a respective connected main point (20-i);
c) for each of the main lines (30-i) and for each of at least respective outermost alternative lines of the respective determined alternative lines (50-j,i) of each alternative point (25-j), calculating (130) a respective buffer zone (30-i-BUFF, 50-j,i-BUFF) comprising all the points that are at a distance less than or equal to a predetermined buffer distance (D_{BUFF}) from the respective main or alternative line (30-i, 50-j,i);
d) forming (140) a corridor zone (55), which is the smallest simply connected volume containing all the determined buffer zones (30-i-BUFF, 50-j,i-BUFF);
e) downloading (147) geospatial data related to the corridor zone (55) into a memory of the vehicle (10) in view of a subsequent navigation of the vehicle (10).

2. Data preparation method (100) according to claim 1, wherein the respective connection distance (D_{CONN,j}) is the ratio of a predetermined sizing coefficient (SC) and the respective alternative distance (D_{ALT,j}) : ${D}_{CONN , j} = \frac{SC}{{D}_{ALT , j}}$

3. Data preparation method (100) according to any of the preceding claims, wherein the formation step d) comprises a validation substep (145) of the corridor zone (55), and if applying providing a new sizing coefficient (SC_{NEW}) and reiterating the determination step b) (120), the calculation step c) (130) and the formation step d) (140) with the new sizing coefficient (SC_{NEW}).

4. Data preparation method (100) according to the preceding claim, further comprising providing a new buffer distance (D_{BUFF, NEW}) for the reiteration of the determination step b) (120), the calculation step c) (130) and the formation step d) (140) with the new sizing coefficient (SC_{NEW}).

5. Data preparation method (100) according to any of the preceding claims, wherein the alternative lines (50-j,i) and optionally the main lines (30-i) are straight lines.

6. Vehicle navigation method (102) comprising:
- performing the data preparation method (90) according to any of the preceding claims, and
- f) navigating the vehicle (10), based on the downloaded geospatial data related to the corridor zone (55).

7. Vehicle navigation method (102) according to the preceding claim, wherein the geospatial data related to the corridor zone (55) are downloaded only once, before moving the vehicle (10) from the start main point (20-1).

8. Vehicle navigation method (102) according to claim 6 or 7, wherein the navigation f) of the vehicle (10) comprises:
f1) monitoring (150A) at least one additional information related to the vehicle (10) and/or to the corridor zone (55) ;
f2) based on the monitoring, determining (150B) if needed at least one updated trajectory (15_{UPD}) to be followed by the vehicle (10) between a respective start point in the corridor zone, corresponding to a current or future position of the vehicle (10) along the current primary trajectory (15), and a respective end point, and in this case,
f3) rerouting (160) the vehicle (10) along the updated trajectory (15_{UPD}).

9. Vehicle navigation method (102) according to the preceding claim, further comprising repeating steps a), b), c), d), and optionally e), with the updated trajectory (15_{UPD}).

10. Navigation system (31) configured for performing the method (100, 102) according to any of the preceding claims.

11. Vehicle (10) equipped with a navigation system (31) according to the preceding claim.
